Europäisches Patentamt

European Patent Office

Office européen des brevets

(11) Publication number: **0 499 497 A2**

## EUROPEAN PATENT APPLICATION

(21) Application number: **92400077.1**

(22) Date of filing: **13.01.92**

(51) Int. Cl.⁵: **G07B 17/02**

(30) Priority: **14.01.91 US 641421**

(43) Date of publication of application:
**19.08.92 Bulletin 92/34**

(84) Designated Contracting States:
**DE FR GB**

(71) Applicant: **ALCATEL SATMAM**
**113 rue Jean-Marin Naudin**
**F-92220 Bagneux(FR)**

(72) Inventor: **Pike, Timothy David**
**16599 Springbrook Lane**
**Castro Valley, California 94552(US)**

(74) Representative: **Sciaux, Edmond**
**c/o SOSPI, 14-16 rue de la Baume**
**F-75008 Paris(FR)**

(54) **Four cue keyboard.**

(57) An improved postage scale interface (4). The interface has four keys including an exit key (10), an enter key (12), a zero key (14), and a cursor movement key (16). Through the use of this four-key system, any one of a variety of postage systems, languages, and changes in rates and services are accommodated by replacement of removable memory (404).

*FIG. 2.*

COPYRIGHT NOTICE

BACKGROUND OF THE INVENTION

The present invention relates to the field of interfaces for equipment. Such equipment includes, in one example, postage scales and associated equipment.

Postage scales and meters have become commonplace in mail rooms everywhere. Postage scales have become ever more sophisticated in their ability to provide a large variety of services to a user. For example, many postage scales today weigh an article, provide a user with a selection of postage options (such as first class, express mail, and the like) from which the desired mail service is selected. The user may then select from optional services (registered mail and the like) and enter the destination of the item to be mailed via a zip or zone code. Calculated postage is then displayed and/or sent to a postage meter for issuance of postage. U.S. Patent Nos. 4,484,307 (Quatse et al.), 4,644,142 (Payn), and 4,742,469 (Haines) disclose postage devices with representative features. These patents are incorporated herein by reference for all purposes.

While meeting with substantial success, postage scales and associated equipment have also met with certain limitations. For example, as postage devices have become increasingly complex, operation of such devices has become increasingly difficult. This problem has arisen in large part because of non-standardized and complex interfaces. It has become increasingly difficult and, therefore, expensive for manufacturers of such meters to change the user interfaces to accommodate new features, to modify the interface to accommodate new optional features, and to accommodate the postal systems and languages of different countries.

Attempts have been made to simplify the user interface of postage devices. For example, Hermann et al. disclose one simplified user interface. However, interfaces such as those proposed by Hermann et al. have met with substantial limitations. Importantly, such interfaces often have limited functionality; in the case of Hermann et al. the interface only inputs printer and baud rate settings. Further, such interfaces provide a "linear" input format in the sense that it is not possible to move the interface from a mode in which, for example, postage rates are being input to a mode in which a user selects from a variety of available services. Instead, a user scrolls through a long series of input parameters, selecting desired parameters as they pass on the display. Such display systems are limited in the variety of selections presented to a user due to the long period of time required to scroll through a long series of choices in a linear fashion.

An improved postage meter interface and method of providing a user interface to a special purpose computer or other similar device is desired.

SUMMARY OF THE INVENTION

The present invention provides an improved system interface and method of interfacing with a computerized system such as a postage scale. According to one preferred embodiment of the invention the user interface includes four buttons for input to the system. The first button is utilized to move the interface to a higher mode in the hierarchy of the system logic, and make a corresponding change in the display. In preferred embodiments, this button also selects a currently indicated selection in a menu. The second button is utilized to move the system to a lower menu in the hierarchical scheme of the system. The third button sets, for example, a scale to zero. The fourth button provides for scrolling among selections within a mode. The system provides for almost unbounded versatility in adding features, switching optional features off and on, and accommodating differences in postage systems and languages by using replaceable memory in conjunction with a universally applicable mechanical input system or set of keys. Further, a user may select desired parameters in a rapid fashion, because commonly used parameters are moved to the "front" of each display mode such that it becomes unnecessary to scroll between selections for a commonly used selection.

A further understanding of the nature and advantages of the inventions herein is realized by reference to the remaining portions of the specification and the attached drawings.

BRIEF DESCRIPTION OF THE DRAWINGS

2

Fig. 1 is an isometric view of a postage scale according to one embodiment of the invention;

Fig. 2 is a detailed view of one embodiment of a scale interface according to one embodiment of the invention;

Fig. 3 is an overall flow chart illustrating operation of the interface;

Fig. 4 is a block diagram illustrating the major electronic hardware components of one embodiment of the invention;

Figs. 5A and 5B illustrate the home menu and key functionality in the home menu;

Figs. 6A and 6B illustrate the menu and key functionality in the functions menu;

Figs. 7A and 7B illustrate the menu and key functionality in the rates menu;

Figs. 8A and 8B illustrate the menu and key functionality in the services menu;

Figs. 9A and 9B illustrate the menu and key functionality in the numbers menu;

Figs. 10A and 10B illustrate the menu and key functionality in the preferences menu; and

Figs. 11A to 11N illustrate function of the system software and user operation in detail according to one embodiment of the invention.

DESCRIPTION OF THE PREFERRED EMBODIMENTS

CONTENTS

I. Definitions
II. Overall Interface Description
III. Hardware Description
IV. Details of Operation
V. Conclusion

I. Definitions

The following terms are intended to have the following general meanings for purposes of the present invention.

1. "Hierarchical level" means, within a logic tree for determining a number of parameters needed for determining, for example, a postage amount, a series of logical options or selections available based on an option selected in a next higher level. The highest level is referred to herein as a "home state" or "home directory."

2. "Leaf level" means the lowest hierarchical level in a logic tree.

3. "Mode" means a menu for selection of postage parameters within a hierarchical level.

4. "BAM" means battery augmented memory, which will generally be RAM, which is maintained with battery power.

II. Overall Interface Description

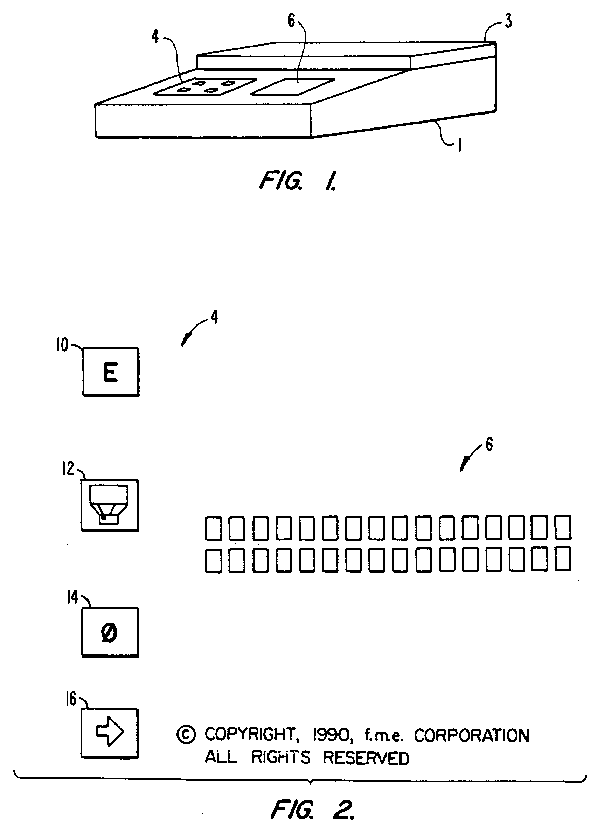

Fig. 1 illustrates a postage scale according to one embodiment of the invention. It is to be understood that a postage scale is presented herein as being representative of a system to which the present interface could be applied. The postage scale includes a body 1 on which a weighing surface 3 is mounted. The body also contains an interface with a keypad 4 and a display section 6. In operation, a user places an article on the weighing surface and provides input to the scale via the keypad. The display provides prompts for the user and, ultimately, diplays an amount of postage due based on the weight of the article and inputs by the user.

Fig. 2 illustrates the user interface of the scale according to one embodiment of the invention in greater detail. The interface includes keypad 4 and display section 6. The display section 6 in the particular embodiment shown in Fig. 2 includes a plurality of LCD character displays and, in the particular embodiment shown in Fig. 2, an array of 2 rows and 16 columns of such LCD characters. It will be clear that a wide variety of display hardware systems could be used in accordance with the invention without departing from the scope thereof. For example, the display could in some embodiments include more or fewer LCD's, or utilize other display technologies such as cathode ray tubes or LED's. An array of 16 LCD's, each for a single character, provides sufficient room for the display of meaningful information to a user in most postage systems while requiring a minimum capital investment.

The keyboard includes a first key 10. The first key 10 is referred to herein as the "exit" key. The primary function of the exit key is to move the system logic and, therefore, the display to a next higher or, in some embodiments, the highest menu or hierarchical level in a hierarchical logic system. In preferred embodiments, pressing the exit key in at least selected modes also "locks" the cursor on the desired value, such that the system uses the desired value in, for example, postage calculations. The second key 12 is referred to herein as the "enter" key. The primary function of the enter key is to move the system logic and, therefore, the display to a lower menu or hierarchical level in a hierarchical logic system. The menu indicated by the cursor is the menu selected for display and entry by the enter key. The third key 14 is referred to herein as the "zero" key. The primary function of this key is to reset the scale such that the tare in the scale is reset to zero. The fourth key 16 is referred to herein as the scroll key. The primary function of the scroll key is to move the cursor on the display from one position to the next.

Added versatility may be added to the interface by complementing the primary functions of the various keys with secondary and/or tertiary functions which operate only in selected modes. Still further versatility may be added by providing additional functionality when more than one key is pressed simultaneously. For example, the zero key may be of limited use when a system is in a lower hierarchical menu. Accordingly, in one or more of such levels the zero key may be used to place the cursor in the display at a home state (i.e., the first displayed selection). Similarly, the enter key in lower levels of the system logic may not be useful and in such lower levels, for example, displays a full definition of an abbreviated selection. Conversely, the exit key will generally not be useful in the highest levels of the system logic and, accordingly, is used to print the home screen in the highest levels of the logic.

Combined pressing of keys may be used such as, for example, by pressing the enter and zero keys together to reset a scale to default values. Combined pressing of the enter and scroll key may be used to scroll registers during numeric entry one position to the right.

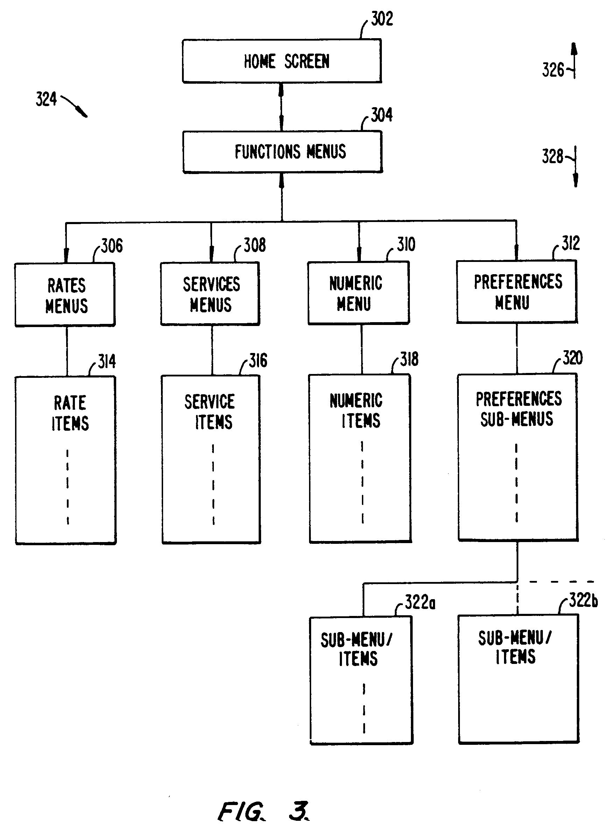

Fig. 3 is a diagram illustrating the hierarchical logic tree used in one possible application of the interface herein, i.e., as an interface for a postage scale. As shown, the system presents the user with a home screen 302 at the highest hierarchical level which may, for example, indicate the weight of the item and the postage due based on the selections made by the user using the interface. When the scale is first utilized (or cleared) the amount of postage due will be based upon default values of the scale. From the home screen the user may move down one level in the logical hierarchy of the system to a functions menu 304. The functions menu presents the user with a number of options for selection of various functions of the interface such as a rate menu 306, a services menu 308, a numeric menu 310, and a preferences menu 312. When the user selects the rates menu 306 from the functions menu 304, the user is presented with a number of rate items 314. When the user selects the services menu 308 from the functions menu, the user is presented with a number of service item selections 316. When the user selects the numeric menu 310, the user is presented with several numeric items 318. When the user selects the preferences menu 312 the user is presented with a number of preference submenus 320. In turn, the user may select one of the preference submenus and enter another level in the system hierarchy from the list 320 and be presented with submenu items 322a, or 322b.

As seen from Fig. 3, the process of selecting various features forms a hierarchical tree 324. The tree includes generally higher levels (indicated in the direction of arrow 326) and lower levels (indicated in the direction of arrow 328). The lowest levels in the particular tree illustrated in Fig. 3 (such as the selections for the rates 306, the services 316, the numeric selections 318, and the submenu items 322a and 322b) are referred to herein as the leaf level in the tree.

Table 1 illustrates exemplary primary, secondary, and tertiary key functions for the four keys according to one specific embodiment of the invention illustrated herein. The function of the key is dependent upon the mode in which the scale is currently operating and, accordingly, the modes in which the specified function is carried out are also provided in Table 1.

EP 0 499 497 A2

Table 1

Key Functions

|  | Primary Function | Secondary Function | Tertiary Function |
|---|---|---|---|
| Key: | | | |
| Exit | Exits to a higher menu (in functions menu 304, rates menu 306, services menu 308, numeric menu 310, preferences menu 312, and sub-menus 322) | Locks cursor to selection (in functions menu 304, rates menu 306, services menu 308, preferences menu 312, and most sub-menus 322) | Prints home screen (in home screen 302) |
| Enter | Enters a lower menu based on a currently selected cursor (in home screen 302, functions menu 304, and preferences menu 320) | Displays definition of abbreviated selection (in rates menu 306, services menu 308, and sub-menus 322) | Transfers values to registers for numeric selection (in numeric menu 310) |
| Zero | Sets scale to zero (zeros the tare) in home screen 302 | Places cursor in home (upper left position) (in functions menu 304, rates menu 306, services menu 308, preferences menu 320, and submenus 322) | Clears selected register (in numeric menu 310) |
| Scroll | Scrolls cursor to right position (all functions) | Scrolls several positions when held (all functions) | |

5

Table 1

Key Functions

(Cont'd)

| | Primary Function | Secondary Function | Tertiary Function |
|---|---|---|---|
| Key: | | | |
| Enter/Zero | Unlocks menu selections/ resets to default (all functions) | | |
| Enter/Scroll | Scrolls register to right one position (in numeric menu 310) | | |

III. Hardware Description

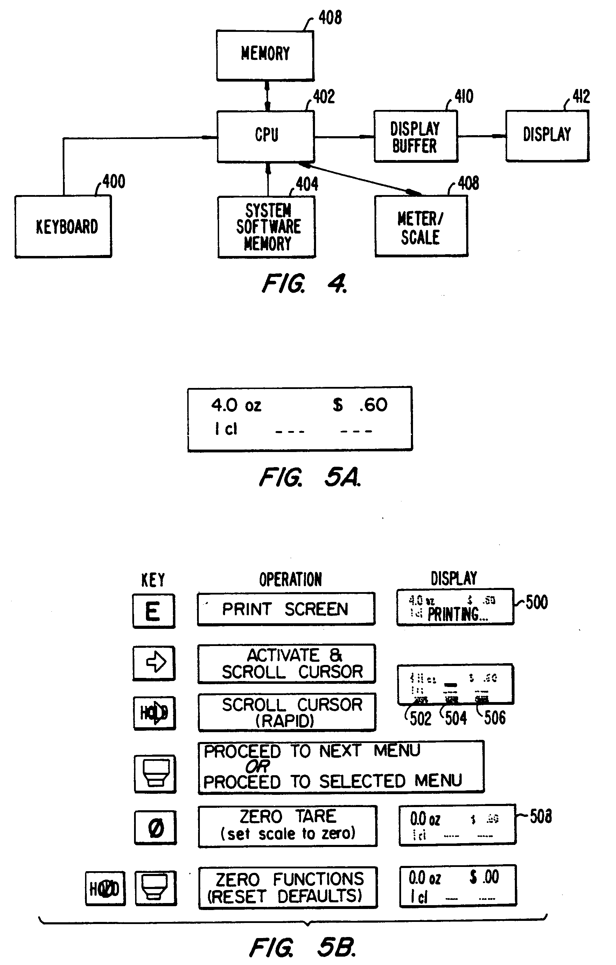

Fig. 4 illustrates in block form one configuration of a hardware system that will be useful in accordance with one embodiment of the invention herein. The hardware system includes a keyboard 400 which inputs appropriate signals to CPU 402. According to one embodiment of the invention the CPU 402 is, for example, a model no. 80C31 microprocessor made by Intel. The system processes signals from the keyboard in accordance with software 404 which is embodied in volatile or non-volatile memory such as RAM, ROM, or the like. In preferred embodiments, the software 404 is embodied in a removable ROM to permit easy removal and replacement of the software to permit flexibility among languages, postage systems, optional features, and the like for a particular user. In alternative embodiments, memory for support of several languages is provided and the language is menu selected.

The CPU also receives input and outputs information to memory 408 which is preferably BAM or ROM. Information stored in memory 408 includes accounting information, and rate tables, according to some embodiments. Of course, various parts of the memory may be embodied in single or separate formats without departing from the scope of the invention herein. The CPU 402 provides output to a display buffer 410 which drives display 412. If the display is insufficiently large for certain menus, the system wraps around by scrolling and displays only a portion of the menu at any time.

CPU 402 receives input signals from and provides driving signals to the meter and/or scale 408 and display based on the software, the values stored in memory, and the inputs from the user. By using removable memory, plug-in modules reconfigure the system for different languages, different postage systems, and changing rates through simple memory module changes without the need to otherwise reconfigure the mechanical portions of the interface such as the keypad.

IV. Details of Operation

Fig. 5A illustrates the display in the home menu mode, which will generally be the default display upon initialization of the machine, or will be entered after a user has provided inputs to the machine for determining the postage due for an item. The display indicates the weight of the item on the scale or most recently on the scale (in this case 4 oz.), the amount of postage due (in this case 60 cents) and the class of mail utilized (in this case, first class). The cursor is not initially displayed in the home menu. If an item is placed on the scale without proceeding through any of the menu driven operations described herein, the postage amount will be based upon default settings, such as conventional first class mail without any

6

special services.

Fig. 5B illustrates the operation of the scale in response to inputs from the four keys, as well as the display resulting from pressing of each of the keys in the home menu mode. In particular, when the exit key is pressed in the home menu mode, the scale prints the display, and indicates as such by displaying the word "printing" in the bottom right-hand corner of the display as shown in display 500. When the scroll key is pressed briefly, the cursor is activated initially and, if pressed briefly again, moves one position to the right (or down when at the top center position, for example). If the cursor is held, it scrolls across the various positions in the display in a rapid fashion.

If the enter key is pressed, the system proceeds to the next menu or a selected menu. As a default, the system will proceed to the functions menu. By moving the cursor from its default position, however, other menus may be accessed directly. For example, if the cursor is placed at the lower left position 502, pressing the enter key brings up the rates display. If the cursor is placed in the lower center position 504, pressing the enter key brings up the services screen. If the cursor is placed in the lower right position 506, pressing the enter key brings up the preferences screen.

Pressing the zero key in the home menu mode zeros the tare, resulting in the display 508. If the zero key is held while also pressing the enter key, the default values of the system (such as first class mail with no special services) are set and the tare is zeroed.

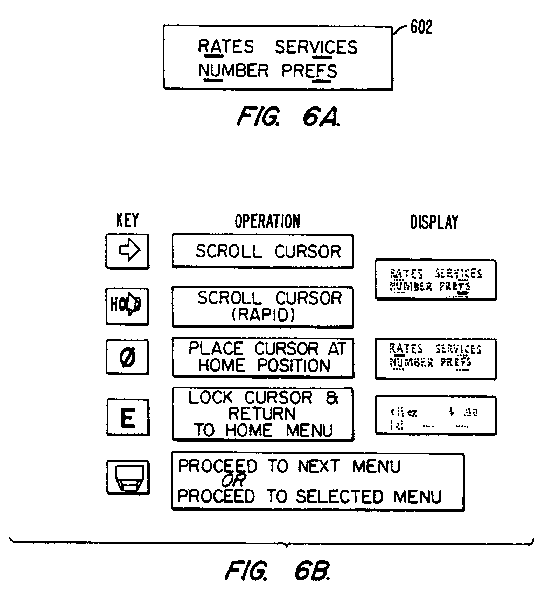

Fig. 6A illustrates the functions menu 602. As shown in the example herein, the functions menu allows the user to select from a rates menu, a services menu, a numbers menu, and a preferences menu. The cursor is initially placed on the last used selection, or on a default selection (such as rates) when the machine is initialized or reset to defaults. Fig. 6B illustrates the operation of the various keys in the functions menu. Pressing the scroll key moves the cursor from one selection to the next, while pressing and holding the cursor moves the cursor across the display in rapid fashion. Pressing the zero key moves the cursor to the home position, which will generally be the rates position in preferred embodiments. Pressing the exit key locks the cursor at its position, and returns the display to the next higher level of the system, i.e., the home menu. After locking the cursor to a selection with the exit key, the next time the menu containing the selection is accessed, the selection it was locked onto will be indicated by the cursor. Pressing the enter key makes the system proceed to the next menu (if the cursor has not been moved) or to the menu indicated by the cursor if the cursor has been moved.

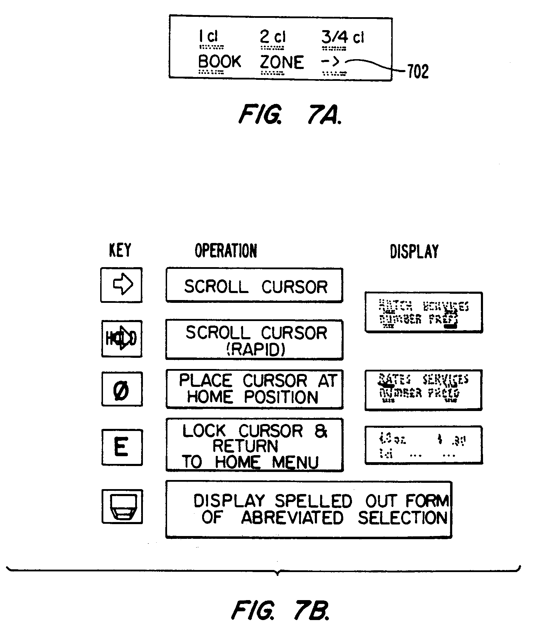

Fig. 7A illustrates the display indicated with the rates menu. As shown, the display in one embodiment will indicate 1cl (first class), 2cl (second class), 3/4 cl (third/fourth class), book, and zone rates. Additional available rates may also be indicated by an arrow key 702. When the cursor is moved to the arrow, additional available rates are then displayed.

Fig. 7B illustrates operation of the various keys when the system is in the rates menu. As with other menus, the scroll key moves the cursor to the right one position when struck, or moves it rapidly when held. Striking the zero key moves the cursor to the home position. Striking the exit key locks the cursor (and therefore, bases calculation of postage) on the indicated service and returns the system to the home menu. The cursor will be displayed at this position when the menu is entered again unless the menus are cleared. Striking the enter key displays the full text of an abbreviation of the selection indicated by the cursor.

If, for example, a user desires to have the calculation of postage based on book rates, the cursor is moved to the "book" position, and the exit key is struck. In preferred embodiments, selection of zone rates in this menu automatically moves the display to the numbers menu to allow entry of a zone, rather than returning to the home menu.

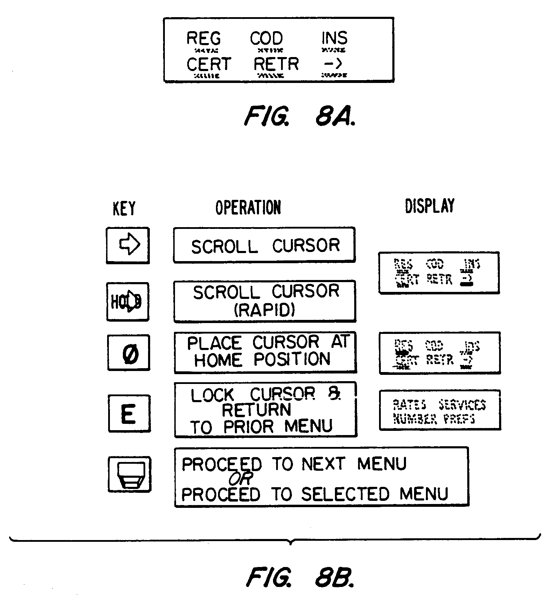

Fig. 8A illustrates the services menu display. As shown therein a variety of optional services are indicated by this display such as "REG" (registered mail), "COD" (cash on delivery), "CERT" (certified mail), "RETR" (return receipt requested), and potentially other optional services (as indicated by the arrow). Fig. 8B illustrates operation of the system in response to striking of the four keys. The scroll key and zero key function in the same manner as in, for example, the rates menu. The exit key locks the cursor on the displayed service and returns the user to the next higher menu (the function menu) in preferred embodiments, allowing easy entry of multiple special services. Striking the enter key moves the display to the next menu or, in the case of special services requiring selection of additional options, the selected menu.

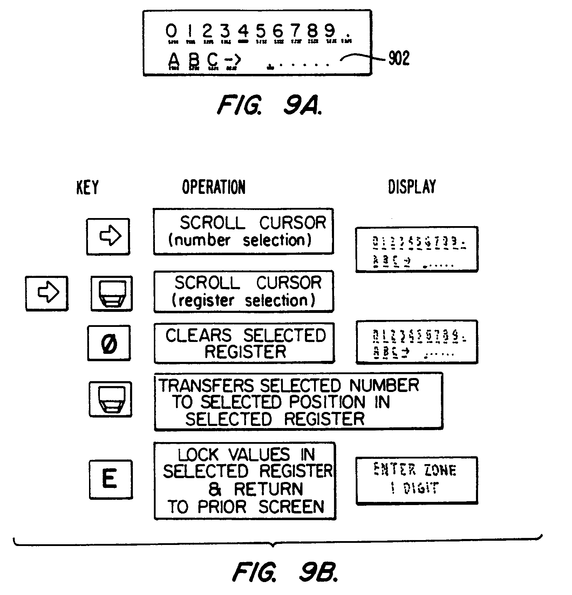

Fig. 9A illustrates the numbers menu. As shown, the menu includes a series of the 10 decimal digits, plus a series of letters of the alphabet representing a series of storage registers. A series of spaces 902 are reserved for display of selected characters and digits. The scroll key works in the same way as in previous menus for selection of a desired digit or character. By striking the scroll key and the enter key simultaneously, the cursor scrolls through the registers for selection of a desired register. Striking zero clears the register and, therefore, the region of the display 902. Striking the enter key causes the selected number to be placed in the selected position in the selected register. Striking the exit key locks the values in the selected register and returns to the prior screen. The numbers display is used to, for example, enter a destination postal zone, an amount to be insured (when insurance is provided as a service option), and the like.

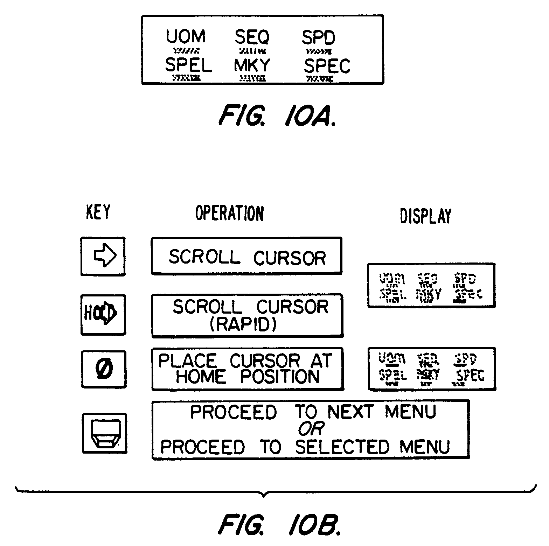

Fig. 10A illustrates the preferences menu. In the particular embodiment shown therein the user is presented with options of "UOM" (units of measure to be used in the system), "SEQ" (sequence of messages), "SPD" (cursor speed control), "MKY" (multi-key enable), and "SPEC" (entry of a special function for custom use). Fig. 10B illustrates the effect of striking the various keys in this menu. Striking the scroll key has the normal effect. Striking the zero key puts the cursor in the first or home position. Striking the enter key moves the system to the next menu or to the selected menu. Naturally, additional levels of logic may be provided. For example, selection of the units of measure selection in the preferences menu will bring up another menu which indicates a variety of units of measures selections. Still further levels of logic in the selection process may be utilized with the same interface disclosed herein.

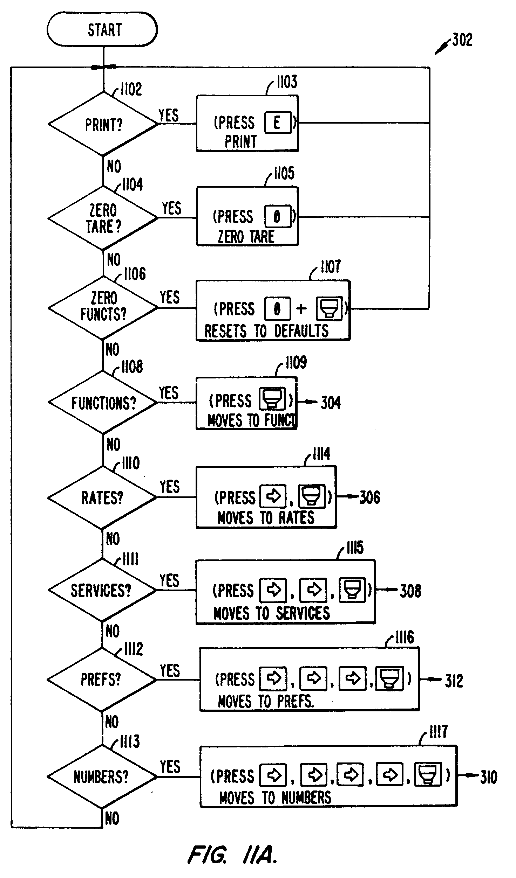

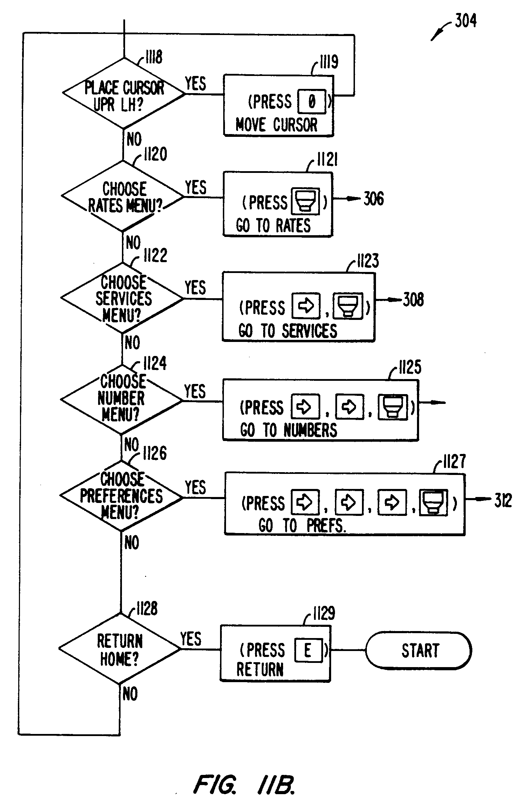

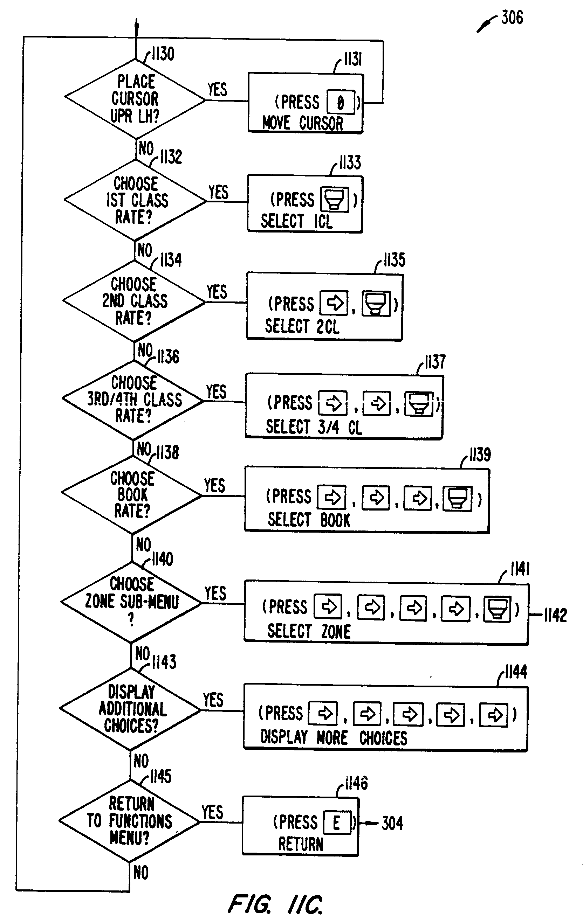

Figs. 11A to 11N are overall block diagrams generally illustrating operation of a system for driving the interface system, along with appropriate indications of the user keystroke sequences necessary to operate the system according to one embodiment of the invention. In particular, Fig. 11A illustrates operation of the system in the Home Screen mode 302. The system functions similarly to a scanned keyboard controller. At step 1102 the system determines if the user has requested a print of the home screen by pressing exit, as shown at step 1103. If so, the system proceeds to print the home screen display at step 1103 and returns to the beginning of the process. If not, the system determines if the user has indicted a desire to zero the tare at step 1104 by pressing the zero key and, if so, at step 1105 zeros the tare and returns to the start of the process. If not, at step 1106 the system determines if the user has indicated a desire to reset the system to defaults by pressing the zero and enter keys simultaneously and, if so, resets to system defaults at step 1107 and returns to the start of the process. If not, the system determines at step 1108 if the user indicates a desire to enter the functions menu by striking the enter key and, if so, moves at step 1109 to the functions menu 304. If not, the system similarly checks to see if the user wishes to enter the rates menu at step 1110 (by striking the cursor key to move the cursor one position, followed by the enter key) and, if so, moves to the rates menu 306 at step 1109. The system makes similar checks at steps 1111 for the services menu, at step 1112 for the preferences menu, and step 1113 for the numbers menu. If any of these are selected by the user, the system moves to the rates menu at step 1114, the services menu at step 1115, the preferences menu at step 1116, or the numbers menu at step 1117 as appropriate. If not, the system recycles to begin the process again.

Fig. 11B illustrates operation of the system in the function screen 304. At steps 1118 and 1119 the system determines if the cursor is to be moved to its home state (because the user has pressed zero) and, if so, moves the cursor to its home state. If not, at steps 1120 and 1121 the system determines if the rates menu is selected and, if so, goes to the rates menu 306. If not, at steps 1122 and 1123 the system determines if the services menu is to be selected and, if so goes to the services menu 308. If not, at steps 1124 and 1125, the system determines if the numbers menu is selected and, if so, goes to the numbers menu 310. If not, at steps 1126 and 1127 the system determines if the preferences menu is to be entered and, if so, enters the preferences menu 312. If not, at steps 1128 and 1129 the system determines if the user has indicated a desire to move to the home menu by striking the exit key and, if so, returns to the home menu. If not, the functions menu process is repeated.

Fig. 11C illustrates the rates screen process 306 in greater detail. At steps 1130 and 1131 the system determines if the cursor is to be placed in the upper left-hand corner and, if so moves the cursor. At steps 1132 and 1133 the system determines if the user has indicated that first class service is desired (by striking enter) and, if so, selects first class rates for postage rate calculations. If not, at steps 1134/1135 the system determines if the user has selected second class postage (by striking the scroll key once, followed by the enter key) and, if so, selects second class rates for postage rate calculations. A similar process is conducted at steps 1136 and 1137 for third/fourth class service selection, at steps 1138 and 1139 for book rate service, and 1140 and 1141 for zone based calculations. If zone rate calculations are selected the system moves to the zone submenu process 1142 illustrated in Fig. 11I. If not, the system will determine if additional choices are to be displayed at step 1143 (by striking the scroll key a sufficient number of times) and, if so, displays additional choices at step 1144. If not, the system determines if it is to return to the functions menu 304 at step 1145 and, if so, does this at step 1146. If not, the process repeats.

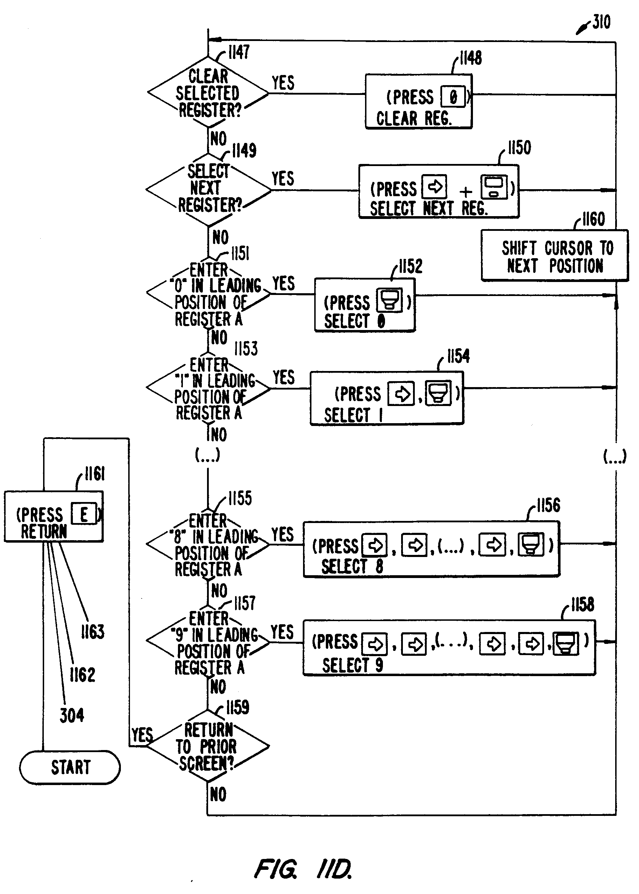

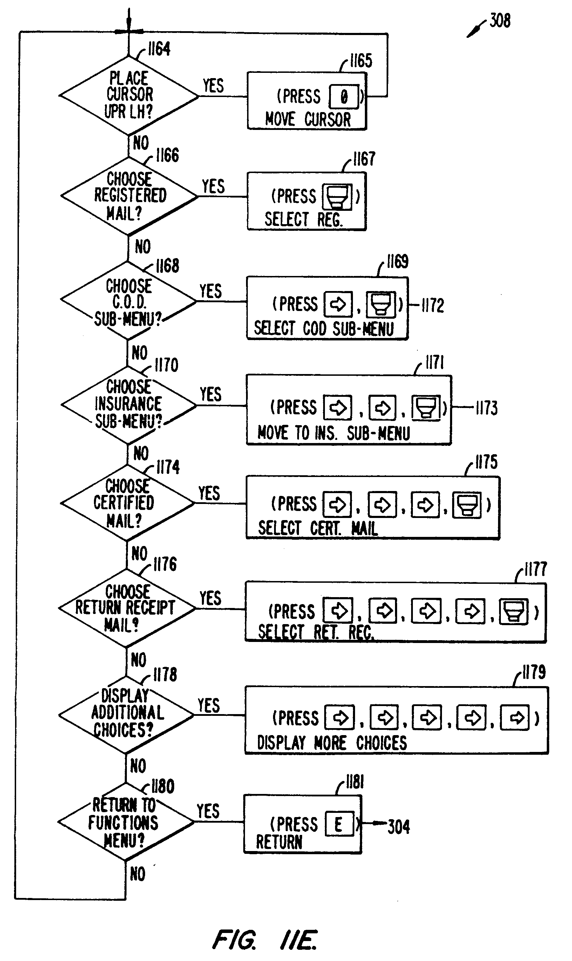

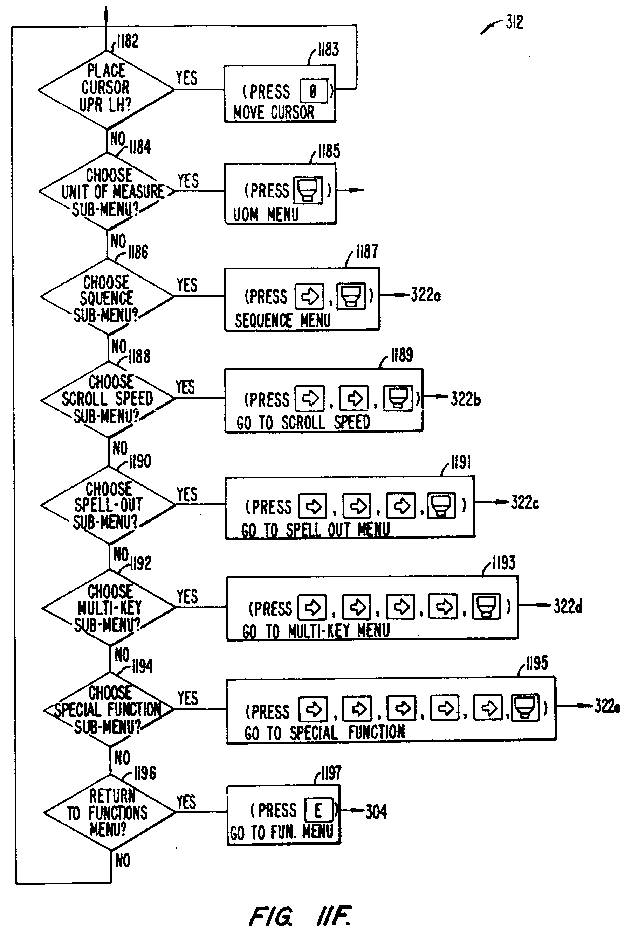

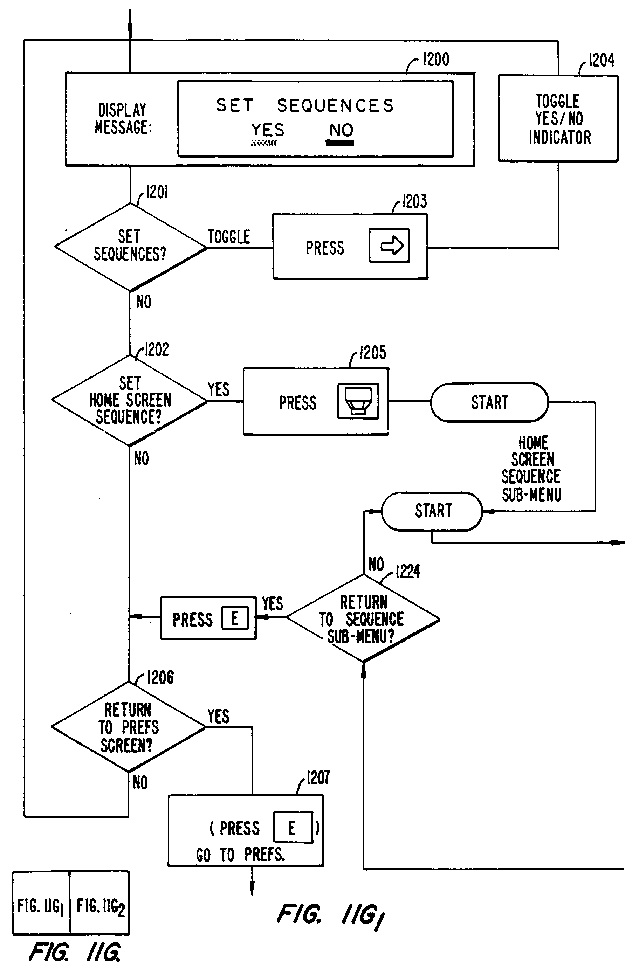

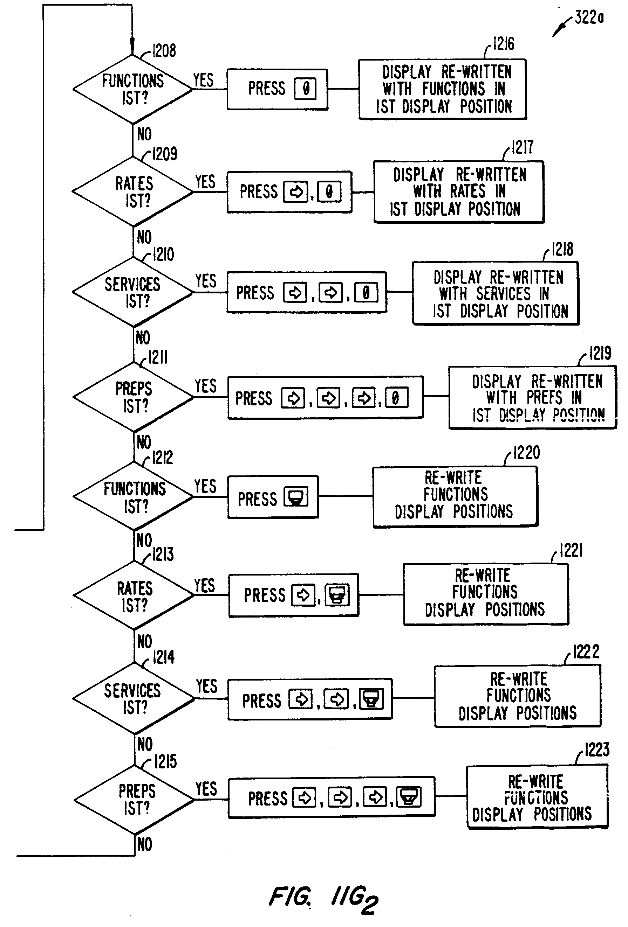

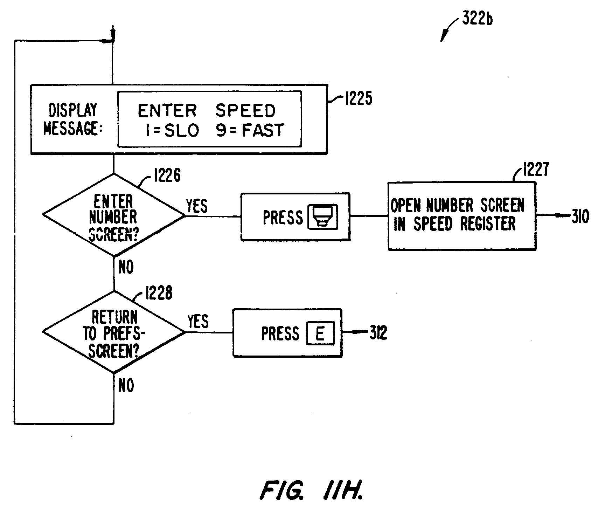

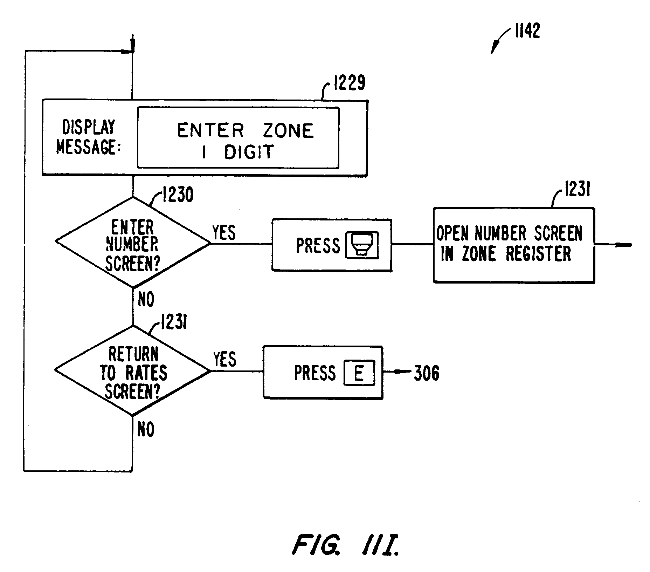

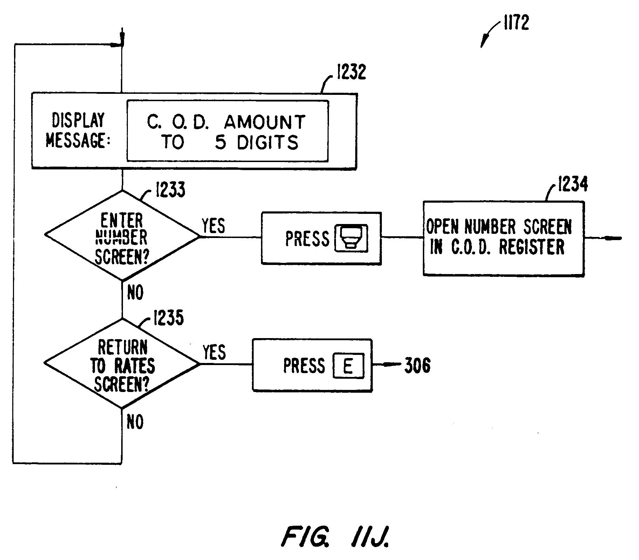

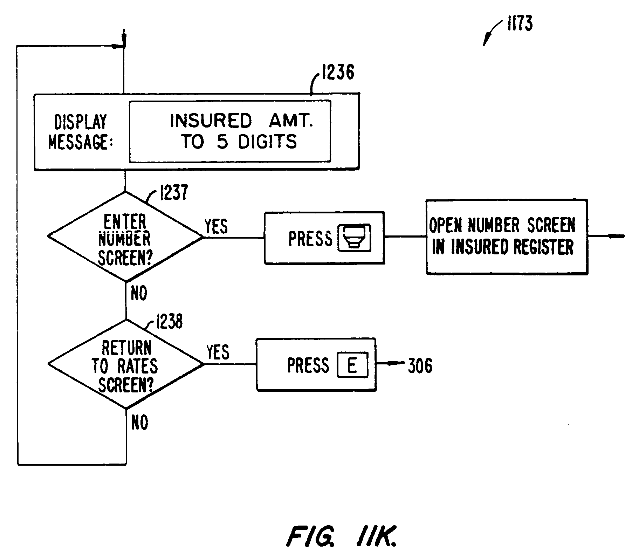

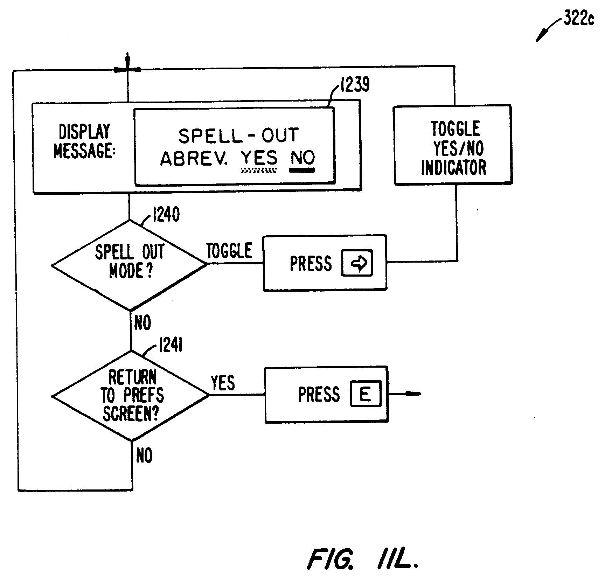

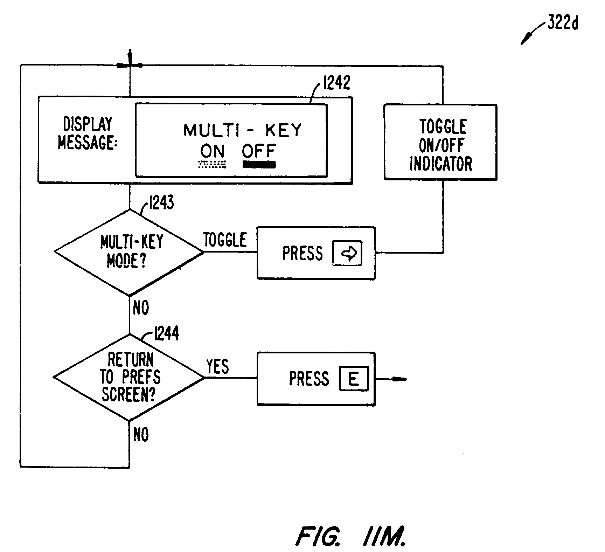

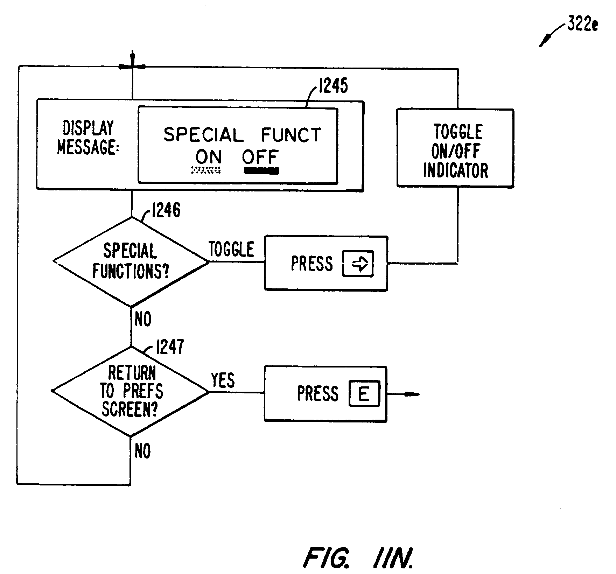

Fig. 11D illustrates operation of the system when the numbers screen 310 is displayed. At step 1147 the system determines if a selected register is to be cleared by determining if the zero key has been pressed. If so, the register is cleared at step 1148 and the system restarts the numbers screen process. If not, the system proceeds to step 1149 and determines if the next register is to be selected (with the user pressing scroll once followed by enter) and if so, selects the next register at step 1150. The system then determines which number is to be placed in the selected register. At step 1151 for example, the system will determine if a zero is to be entered (the first number selected) by the user pressing enter. If not, the system determines if the user desires a "1" at step 1153 (by having pushed the scroll key once followed by enter) and, if so, selecting a "1" for the selected register. The process is continued for selection of one of the digits "2" to "9" such as in steps 1155 and 1157. After selecting a digit, at step 1160 the cursor is moved to the next position, assuming the user does not indicate a move to the prior screen at step 1159 (by striking exit). If the user strikes exit the screen is returned to its prior state such as functions screen 304.

Fig. 11E illustrates the operation of the system in the services menu. At steps 1164 and 1165 the system places the cursor in the upper left hand corner if the zero key has been pressed. At steps 1166, 1168, 1170, 1174, and 1176 the system checks to determine which if any special service is selected and, if one has been selected, selects the service and, in the case of COD and insured services, moves the user to another submenu such as a COD submenu 1172 or an insurance submenu 1173. At step 1178 the system checks for selection of and at step 1179 displays more choices. At step 1180 the system determines if the user desires to return to the functions menus and, if so, returns to the functions menu at step 1181, otherwise returning to repeat the services menu process.

Fig. 11F illustrates operation of the system in the preferences screen 312. Following a procedure similar to that set forth in conjunction with the above menus, the system checks for/moves the cursor at steps 1182/1183, checks for/moves the system to a units of measure submenu at steps 1184/1185, checks for/moves to a sequence submenu at steps 1186/1187, checks for/moves to a scroll speed submenu at steps 1188/1189, checks for/moves to a spell out submenu at steps 1190/1191, checks for/moves to a multi-key submenu at steps 1192/1193, and checks for/moves to a special function submenu at steps 1194/1195. Like the other menus, the system also checks to determine if the user wishes to move back to the functions menu (as indicated by striking the exit key) and moves to the functions menu at step 1197. The system then recycles to the start of the preferences menu process if no selections have been made by the user.

Fig. 11G illustrates the sequence selection submenu operation 322a. At step 1200 the system displays the initial sequences message. At step 1201 the system determines if the user wishes to set or vary a menu display sequence, having toggled the cursor to yes and striking the home screen sequence at step 1202. If necessary the user can toggle the cursor at steps 1202/1203 to indicate "yes" by way of the cursor. The user makes the indication of desiring to alter the home screen sequence by striking enter at step 1205. If the user has not indicated a desire to modify the sequence of a display, at step 1206 the system determines if the user desires to move to the preferences screen and, if so (as indicated by striking exit) moves to the preferences screen at step 1207.

If the user has indicated a desire to change the sequence of the home screen menu, the system in steps 1208 to 1211 determines if the user desires to place various items first on the display by moving the cursor to the selected item and pressing zero. Similarly, in steps 1212 to 1215 the system determines if the user wishes to place various items first in the functions menu. If the user indicates a desire to place an item first (such as by moving the cursor to rates and striking zero) the indicated item is placed first in the menu in the appropriate one of steps 1216 to 1223. The user is allowed to reenter the sequence submenu at step 1224 by striking exit.

Fig. 11H illustrates operation of the system in the scroll speed submenu 322b. At step 1225 the system displays the enter speed screen. At step 1226 the user moves to the numbers screen for entry of a speed by striking enter, which moves the system to the number screen at step 1227. At step 1228 the user may return to the preferences screen by striking exit, and if the user does none of the above, the sequence repeats.

Fig. 11I illustrates the zone submenu 1142. At step 1229 the system displays the zone submenu. At step 1230 the user may enter the number screen by striking enter, in which case the number screen in a zone register mode is opened at step 1231 for storage of a postal zone number in its selected register. At step 1232 the user may return to the rates screen by striking exit.

Fig. 11J illustrates operation of the system in the COD amount mode 1172. At step 1232 the system displays the COD amount screen. At step 1233 the user may enter a number by striking the enter key, which will move the system to the number screen for entry into a COD register at step 1234. The user may return to the rates screen at step 1235 by striking exit.

Fig. 11K illustrates the insured amount entry process 1173. At step 1236 the appropriate screen is displayed. At step 1237 the user may enter the numbers screen by striking enter, or at step 1238 the user may return to the rates screen by striking exit.

Fig. 11L illustrates the spell-out selection system for having full words displayed rather than abbreviations. At step 1239 the appropriate screen is displayed. If the user selects this mode, the spelled-out version of the abbreviation appears briefly, and then returns to the abbreviated version. At step 1240 the user may select the spell-out mode by toggling to yes and striking enter. At step 1241 the user may return to the preferences screen by striking exit.

Fig. 11M illustrates the multi-key operation for allowing multi-key operation. At step 1242 the system displays the appropriate menu and at step 1243 the user may select multi-key operation by toggling to yes and striking enter. At step 1244 the user may move back to the preferences key by striking exit.

Fig. 11N illustrates a special function menu which may be programmed to perform a custom feature for a particular user. The appropriate display is provided at step 1245 and at step 1246 the user may toggle to yes if the function is desired. At step 1247 the user may return to the preferences menu by striking exit.

In a preferred embodiment, the displays described above present selections in order of decreasing use. In one embodiment, the system automatically "moves" the last selected item to the front of the stack. For example, if the user last selected 3rd class, the system automatically presents 3rd class first the next time the rate menu is entered. Alternatively, if a particular facility uses book rates more than other rates, the menu is modified in software to present book rates first, with the cursor initially positioned on book rates after selection of the rate menu. Since the interface relies almost entirely on software for the presentation scheme, the default selection within each menu is modified by the user or supplier of the instrument by reprogramming or replacement of ROM plug-in software. According to one embodiment, the system maintains a count of the number of times a user chooses each selection. The system then automatically updates the order of presentation of the selections based on recent use. For example, if the system originally displays 1st class first, but after a predetermined number of uses (e.g., 10) the internal counter determines that book rates are used more frequently, the display is modified by the system to present the book rates first with the cursor initially placed on book rates. Of course, this system of presenting the most commonly used selection is applied in preferred embodiments not only to the rate menu, but also to the home screen menu, the service menu, and any other menus.

In some embodiments, the system defaults not to the most commonly used selection, but instead to the "safest" selection. According to these embodiments, the system might default to first class, even though the most commonly used selection is book rate. This assures the application of sufficient postage, at the risk of applying excess postage. Importantly, if a particular service is not available with a rate class selected by the user, this service is either not displayed or the cursor skips the unavailable selection when it is moved through the screen. For example, if COD is not available when book rate mail is used, COD is not displayed when the service menu is selected after selection of COD in the rates menu. Of course, user specific selections may also be readily blocked in software. For example, if a particular meter in a facility is to be used only for book or 4th class mail, higher cost services may be blocked from selection through the use of the ROM containing the selection software.

If the user does not enter the rate menu before displaying a postage amount, the system issues postage based on a default rate according to some embodiments. In most cases, default selections are those selections which are displayed first (and on which the system places the cursor initially).

V. Conclusion

The postage system interface disclosed herein is particularly versatile and cost effective. The above description is illustrative and not restrictive. Many variations of the invention will become apparent to those of skill in the art upon review of this disclosure. Merely by way of example the invention could readily be applied to postage systems with more or less complex logic. The scope of the invention should, therefore, be determined not with reference to the above description, but instead should be determined with reference to the appended claims along with their full scope of equivalents.

**Claims**

1. A user interface for a computer system, said computer system programmed to prompt a user to select between a plurality of options according to a hierarchical selection process, consisting essentially of:
   a) a first key, said first key adapted to clear at least one of said options;
   b) a second key, said second key adapted to move a display from one level in said hierarchical selection process to another level in said hierarchical selection process;
   c) a third key, said third key adapted to move a cursor between indicated selections in said display; and
   d) a display for indicating selections in said hierarchical selection process.

2. A user interface for a computer system, said computer system programmed to prompt a user to select between a plurality of options according to a hierarchical selection process, consisting essentially of:

a) a first key, said first key adapted to move a display from one level in said hierarchical selection process to another higher level in said hierarchical selection process;

b) a second key, said second key adapted to move a display from one level in said hierarchical selection process to another lower level in said hierarchical selection process;

c) a third key, said third key adapted to move a cursor between indicated selections in said display; and

d) a display for indicating selections in said hierarchical selection process.

3. A user interface for a computer system, said computer system programmed to prompt a user to select between a plurality of options according to a hierarchical selection process, consisting essentially of:

a) a first key, said first key adapted to clear at least one of said options;

b) a second key, said second key adapted to move a display from one level in said hierarchical selection process to another higher level in said hierarchical selection process;

c) a third key, said third key adapted to move a cursor between indicated selections in said display;

d) a fourth key, said fourth key adapted to move a display from one level in said hierarchical selection process to another lower level in said hierarchical selection process; and

e) a display for indicating selections in said hierarchical selection process.

4. Apparatus for indicating an amount of postage for an article comprising:

a) storage means, said storage means storing at least a program for determining said amount of postage due based on user selections, said program having a hierarchical selection system for determining an amount of postage due, said hierarchical system having at least first and second levels, at least one of said levels having more than one mode;

b) central processing means, said central processing means outputting said amount of postage using said program for determining an amount of postage due based on said hierarchical selection system and user selections input to said system;

c) interface means for a user to input said user selections, said interface means further comprising:

i) a display, said display adapted to indicate a variety of selections and indicate a current selection; and

ii) a keypad, said keypad comprising at least a first key for scrolling between said selections in said displayed mode, a second key for moving to a higher level in said hierarchical selection system, and a third key for a user to move to a lower level in said hierarchical selection system, at least one of said second or third keys selecting a currently indicated selection for use.

5. The postage device as recited in claim 4 further comprising a fourth key, said fourth key clearing said interface.

6. The postage device as recited in claim 4 wherein said storage means is a replaceable ROM.

7. The postage device as recited in claim 4 wherein said hierarchical system comprises:

a) a home screen level for selecting between at least postage rates and optional services modes;

b) a rate mode for selecting between at least first class and one lower rate service; and

c) a service mode for selecting between at least certified mail and one other optional service.

8. The postage device as recited in claim 7 wherein said hierarchical system further comprises:

a) a numeric menu for selecting at least zip or zone codes; and

b) a setup menu for selecting various default features in said postage meter.

9. The postage device as recited in claim 4 wherein said display is an array of LCD's, each of said LCD's adapted to display a single character.

10. The postage device as recited in claim 4 programmed to initially indicate a most commonly used selection upon entering a new mode.

11. The postage device as recited in claim 4 programmed to block incompatible services from selection based upon a previous selection of a user.

**12.** The postage device as recited in claim 4 programmable to block selected services from selection by a user.

**13.** A keypad for a postage device interface consisting essentially of:

a) a first key for clearing a display;
b) a second key for moving a current selection indicator on said display;
c) a third key for selecting a current selection in said display; and
d) a fourth key for moving said display to a next mode.

**14.** A postage scale interface having a display, an exit key, an enter key, a zero key, and a scroll key, said postage scale programmed to prompt a user for postage selections and calculate postage due based on said options, said program adapted to display a home screen for indicating said postage due, a functions screen for indicating functions performed by said interface, a rates menu for selecting between postal rates, a services menu for selecting optional postage services, a numeric menu for inputting a series of numbers, a preferences menu for setting default settings for said display, and a plurality of submenus, wherein said keys are programmed to perform primary, secondary, and tertiary functions according to the following table:

## Table

## Key Functions

|  | Primary Function | Secondary Function | Tertiary Function |
|---|---|---|---|
| **Key:** |  |  |  |
| Exit | Exits to a higher menu (in functions menu, rates menu, services menu, numeric menu, preferences menu, and sub-menus) | Locks cursor to selection (in functions menu, rates menu, services menu, preferences menu, and selected sub-menus) | Prints home screen (in home screen) |
| Enter | Enters a lower menu based on a currently selected cursor (in home screen, functions menu, and preferences menu) | Displays definition of abbreviated selection (in rates menu, services menu, and sub-menus) | Transfers values to registers for numeric selection (in numeric menu) |
| Zero | Sets scale to zero (zeros the tare) in home screen | Places cursor in home (upper left position) (in functions menu 304, rates menu 306, services menu 308, preferences menu 320, and submenus 322) | Clears selected register (in numeric menu) |

Table

Key Functions

(Cont'd)

|  | Primary Function | Secondary Function | Tertiary Function |
|---|---|---|---|
| Key: | | | |
| Scroll | Scrolls cursor to right posi-tion (all functions) | Scrolls several positions when held (all functions) | |
| Enter/Zero | Unlocks menu selections/ resets to default (all functions) | | |
| Enter/Scroll | Scrolls register to right one position (in numeric menu) | | |

14

FIG. 1.

© COPYRIGHT, 1990, f.m.e. CORPORATION
ALL RIGHTS RESERVED

FIG. 2.

FIG. 3.

**FIG. 4.**

Block diagram:

- MEMORY (408)
- CPU (402)
- DISPLAY BUFFER (410)
- DISPLAY (412)
- KEYBOARD (400)
- SYSTEM SOFTWARE MEMORY (404)
- METER/SCALE (408)

```
4.0 oz          $  .60
l cl     - - -      - - -
```

**FIG. 5A.**

| KEY | OPERATION | DISPLAY |
|-----|-----------|---------|
| E | PRINT SCREEN | 4.0 oz  $ .60 / l cl PRINTING... (500) |
| ⇨ | ACTIVATE & SCROLL CURSOR | |
| HOLD | SCROLL CURSOR (RAPID) | (502) (504) (506) |
| ▽ | PROCEED TO NEXT MENU *OR* PROCEED TO SELECTED MENU | |
| Ø | ZERO TARE (set scale to zero) | 0.0 oz  $ .60 / l cl (508) |
| HOLD ▽ | ZERO FUNCTIONS (RESET DEFAULTS) | 0.0 oz  $ .00 / l cl |

**FIG. 5B.**

602

```
RATES   SERVICES
NUMBER  PREFS
```

## FIG. 6A.

| KEY | OPERATION | DISPLAY |
|---|---|---|
| ⇨ | SCROLL CURSOR | |
| HOLD | SCROLL CURSOR (RAPID) | RATES SERVICES NUMBER PREFS |
| Ø | PLACE CURSOR AT HOME POSITION | RATES SERVICES NUMBER PREFS |
| E | LOCK CURSOR & RETURN TO HOME MENU | |
| ⬜ | PROCEED TO NEXT MENU OR PROCEED TO SELECTED MENU | |

## FIG. 6B.

**FIG. 7A.**

**FIG. 7B.**

| REG | COD | INS |
|-----|-----|-----|
| CERT | RETR | -> |

**FIG. 8A.**

| KEY | OPERATION | DISPLAY |
|-----|-----------|---------|
| ⇨ | SCROLL CURSOR | |
| HOLD | SCROLL CURSOR (RAPID) | |
| Ø | PLACE CURSOR AT HOME POSITION | |
| E | LOCK CURSOR & RETURN TO PRIOR MENU | RATES SERVICES NUMBER PREPS |
| ⬇ | PROCEED TO NEXT MENU *OR* PROCEED TO SELECTED MENU | |

**FIG. 8B.**

0 1 2 3 4 5 6 7 8 9 .:

A B C ->  . . . . .  —902

## FIG. 9A.

| KEY | OPERATION | DISPLAY |
|---|---|---|
| ⇨ | SCROLL CURSOR (number selection) | 0123456789.: ABC⇒ ...... |
| ⇨ ⯆ | SCROLL CURSOR (register selection) | |
| Ø | CLEARS SELECTED REGISTER | 0123456789.: ABC⇒ ...... |
| ⯆ | TRANSFERS SELECTED NUMBER TO SELECTED POSITION IN SELECTED REGISTER | |
| E | LOCK VALUES IN SELECTED REGISTER & RETURN TO PRIOR SCREEN | ENTER ZONE 1 DIGIT |

## FIG. 9B.

UOM    SEQ    SPD

SPEL    MKY    SPEC

**FIG. IOA.**

| KEY | OPERATION | DISPLAY |
|---|---|---|
| ⇨ | SCROLL CURSOR | |
| HO◁♦ | SCROLL CURSOR (RAPID) | |
| Ø | PLACE CURSOR AT HOME POSITION | |
| ▽ | PROCEED TO NEXT MENU *OR* PROCEED TO SELECTED MENU | |

**FIG. IOB.**

FIG. IIA.

FIG. 11B.

24

EP 0 499 497 A2

FIG. IIC.

25

FIG. IID.

308

1164 PLACE CURSOR UPR LH? — YES → 1165 (PRESS [0]) MOVE CURSOR

NO

1166 CHOOSE REGISTERED MAIL? — YES → 1167 (PRESS [⎕]) SELECT REG.

NO

1168 CHOOSE C.O.D. SUB-MENU? — YES → 1169 (PRESS [⇨], [⎕]) — 1172 SELECT COD SUB-MENU

NO

1170 CHOOSE INSURANCE SUB-MENU? — YES → 1171 (PRESS [⇨], [⇨], [⎕]) — 1173 MOVE TO INS. SUB-MENU

NO

1174 CHOOSE CERTIFIED MAIL? — YES → 1175 (PRESS [⇨], [⇨], [⇨], [⎕]) SELECT CERT. MAIL

NO

1176 CHOOSE RETURN RECEIPT MAIL? — YES → 1177 (PRESS [⇨], [⇨], [⇨], [⇨], [⎕]) SELECT RET. REC.

NO

1178 DISPLAY ADDITIONAL CHOICES? — YES → 1179 (PRESS [⇨], [⇨], [⇨], [⇨], [⇨]) DISPLAY MORE CHOICES

NO

1180 RETURN TO FUNCTIONS MENU? — YES → 1181 (PRESS [E]) → 304 RETURN

NO

FIG. IIE.

27

~312

```
  ┌─────────────────────────────────────────────────────────────────┐
  │                                                                   │
  │        ╱1182                              ╱1183                    │
  │       ╱ PLACE ╲      YES        ┌──────────────────┐              │
  │      ╱ CURSOR  ╲───────────────▶│ (PRESS  [0] )     │              │
  │      ╲ UPR LH? ╱                │ MOVE CURSOR       │              │
  │       ╲      ╱                  └──────────────────┘              │
  │          │NO 1184                                                 │
  │        ╱      ╲                           ╱1185                    │
  │       ╱ CHOOSE ╲    YES         ┌──────────────────┐              │
  │      ╱UNIT OF MEASURE╲─────────▶│ (PRESS [▽] )     │─────▶         │
  │      ╲ SUB-MENU? ╱              │ UOM MENU          │              │
  │       ╲        ╱                └──────────────────┘              │
  │          │NO 1186                                                 │
  │        ╱      ╲                           ╱1187                    │
  │       ╱ CHOOSE ╲    YES         ┌──────────────────┐              │
  │      ╱ SQUENCE  ╲──────────────▶│ (PRESS [⇨],[▽] ) │──▶ 322a      │
  │      ╲ SUB-MENU?╱               │ SEQUENCE MENU     │              │
  │       ╲        ╱                └──────────────────┘              │
  │          │NO 1188                                                 │
  │        ╱      ╲                           ╱1189                    │
  │       ╱ CHOOSE ╲    YES         ┌────────────────────────┐        │
  │      ╱SCROLL SPEED╲────────────▶│ (PRESS [⇨],[⇨],[▽] )   │▶322b   │
  │      ╲ SUB-MENU? ╱              │ GO TO SCROLL SPEED      │        │
  │       ╲        ╱                └────────────────────────┘        │
  │          │NO 1190                                                 │
  │        ╱      ╲                           ╱1191                    │
  │       ╱ CHOOSE ╲    YES         ┌──────────────────────────────┐  │
  │      ╱SPELL-OUT ╲──────────────▶│ (PRESS [⇨],[⇨],[⇨],[▽] )     │▶322c│
  │      ╲ SUB-MENU?╱               │ GO TO SPELL OUT MENU          │  │
  │       ╲        ╱                └──────────────────────────────┘  │
  │          │NO 1192                                                 │
  │        ╱      ╲                           ╱1193                    │
  │       ╱ CHOOSE ╲    YES         ┌────────────────────────────────┐│
  │      ╱MULTI-KEY ╲──────────────▶│(PRESS [⇨],[⇨],[⇨],[⇨],[▽] )   │▶322d
  │      ╲ SUB-MENU?╱               │ GO TO MULTI-KEY MENU           ││
  │       ╲        ╱                └────────────────────────────────┘│
  │          │NO 1194                                                 │
  │        ╱      ╲                           ╱1195                    │
  │       ╱ CHOOSE ╲    YES         ┌──────────────────────────────────┐
  │      ╱SPECIAL FUNCTION╲────────▶│(PRESS [⇨],[⇨],[⇨],[⇨],[⇨],[▽] ) │▶322a
  │      ╲ SUB-MENU?╱               │ GO TO SPECIAL FUNCTION            │
  │       ╲        ╱                └──────────────────────────────────┘
  │          │NO 1196                                                 │
  │        ╱      ╲                           ╱1197                    │
  │       ╱ RETURN ╲    YES         ┌──────────────────┐              │
  │      ╱TO FUNCTIONS╲────────────▶│ (PRESS [E] )     │─▶304         │
  │      ╲ MENU? ╱                  │ GO TO FUN. MENU   │              │
  │       ╲    ╱                    └──────────────────┘              │
  │          │NO                                                      │
  └──────────┘                                                        │
```

*FIG. 11F.*

**FIG. 11G₁**

FIG. 11G.

| FIG. 11G₁ | FIG. 11G₂ |

322a

**1208** FUNCTIONS IST? — YES → PRESS [0] → **1216** DISPLAY RE-WRITTEN WITH FUNCTIONS IN IST DISPLAY POSITION

NO

**1209** RATES IST? — YES → PRESS [⇨],[0] → **1217** DISPLAY RE-WRITTEN WITH RATES IN IST DISPLAY POSITION

NO

**1210** SERVICES IST? — YES → PRESS [⇨],[⇨],[0] → **1218** DISPLAY RE-WRITTEN WITH SERVICES IN IST DISPLAY POSITION

NO

**1211** PREPS IST? — YES → PRESS [⇨],[⇨],[⇨],[0] → **1219** DISPLAY RE-WRITTEN WITH PREFS IN IST DISPLAY POSITION

NO

**1212** FUNCTIONS IST? — YES → PRESS [▽] → **1220** RE-WRITE FUNCTIONS DISPLAY POSITIONS

NO

**1213** RATES IST? — YES → PRESS [⇨],[▽] → **1221** RE-WRITE FUNCTIONS DISPLAY POSITIONS

NO

**1214** SERVICES IST? — YES → PRESS [⇨],[⇨],[▽] → **1222** RE-WRITE FUNCTIONS DISPLAY POSITIONS

NO

**1215** PREPS IST? — YES → PRESS [⇨],[⇨],[⇨],[▽] → **1223** RE-WRITE FUNCTIONS DISPLAY POSITIONS

NO

FIG. IIG₂

322b

DISPLAY
MESSAGE:    ENTER   SPEED
            1= SLO   9= FAST    ⌐1225

ENTER
NUMBER    YES    PRESS 🖳    OPEN NUMBER SCREEN    ─310
SCREEN?                      IN SPEED REGISTER
⌐1226                        ⌐1227

NO

RETURN
TO PREFS-    YES    PRESS  E    ─312
SCREEN?
⌐1228

NO

*FIG. 11H.*

31

1142

1229

| DISPLAY MESSAGE: | ENTER ZONE 1 DIGIT |
|---|---|

1230

ENTER NUMBER SCREEN?

YES → PRESS ⬒

1231

OPEN NUMBER SCREEN IN ZONE REGISTER →

NO

1231

RETURN TO RATES SCREEN?

YES → PRESS [E] —306

NO

*FIG. III.*

/ 1172

┌─────────────────────────────────────┐ 1232
│ DISPLAY │ C. O. D. AMOUNT │
│ MESSAGE: │ TO 5 DIGITS │
└─────────────────────────────────────┘

1233
ENTER
NUMBER      ──YES──► PRESS [ ]  ──── OPEN NUMBER SCREEN ──►
SCREEN?                              IN C.O.D. REGISTER   1234

NO

1235
RETURN
TO RATES    ──YES──► PRESS [E]  ──── 306
SCREEN?

NO

FIG. 11J.

1173

1236

| DISPLAY MESSAGE: | INSURED AMT. TO 5 DIGITS |
|---|---|

1237

ENTER NUMBER SCREEN? — YES → PRESS [⌨] → OPEN NUMBER SCREEN IN INSURED REGISTER

NO

1238

RETURN TO RATES SCREEN? — YES → PRESS [E] — 306

NO

## FIG. IIK.

322c

1239

| DISPLAY MESSAGE: | SPELL-OUT ABREV. YES NO | | TOGGLE YES/NO INDICATOR |

1240

SPELL OUT MODE? — TOGGLE → PRESS ⇨

NO

1241

RETURN TO PREFS SCREEN? — YES → PRESS E

NO

FIG. IIL.

322d

DISPLAY MESSAGE:

┌─────────────────┐ 1242
│  MULTI - KEY    │
│   ON   OFF      │
│  ▒▒▒▒▒  ━━━      │
└─────────────────┘

TOGGLE ON/OFF INDICATOR

1243

MULTI-KEY MODE?  —TOGGLE→  PRESS [⇨]

NO

1244

RETURN TO PREFS SCREEN?  —YES→  PRESS [E]

NO

*FIG. IIM.*

322e

FIG. 11N.